# EUROPEAN PATENT APPLICATION

(11) **EP 4 617 307 A1**
(43) Date of publication of application: **17.09.2025**
(21) Application number: 23889146.9
(22) Date of filing: 08.11.2023
(51) Int. Cl.: C08K 5/053, C08K 5/098, C08K 5/103, C08K 5/521, C08L 1/04

(54) **THERMOPLASTIC RESIN COMPOSITION, AND PREPARATION METHOD THEREFOR**

(30) Priority: 10.11.2022 KR 20220149600
(71) Applicant: LOTTE Fine Chemical Co., Ltd., Nam-gu, Ulsan 44714 (KR)
(72) Inventor: KIM, Dooho, Ulsan 44714 (KR); JEON, Gyujong, Ulsan 44714 (KR); KANG, Gyungdon, Ulsan 44714 (KR)
(74) Representative: Michalski Hüttermann & Partner Patentanwälte mbB
(86) International application number: PCT/KR2023/017884
(87) International publication number: WO 2024/101888

(57) **Abstract**

The present invention relates to a thermoplastic resin composition and a preparation method therefor and, more specifically, to: an environmentally friendly thermoplastic resin composition which is biodegradable, has excellent molding processability, and has improved mechanical properties such as tensile strength and elongation, and which can be applied as an environmentally friendly material in various fields; and a preparation method therefor.

## Description

### Technical Field

The present disclosure relates to a thermoplastic resin composition and a method of preparing the same and, more particularly, to an environmentally friendly thermoplastic resin composition that is biodegradable, and a method of preparing the same.

### Background Art

Chains in thermoplastic resins, unlike thermosetting resins, have no inter-chain bonds (that is, they are not cross-linked) and thus are advantageously molded and processed. The easiest way to mold and process such thermoplastic resins is to utilize the thermal properties of thermoplastic polymers. Thermoplastic polymers change from solid to liquid at temperatures of the melting point thereof or higher and are easily moldable into desired forms. In industry, molding of such polymers often involves the use of injection molding machines. Specifically, solid thermoplastic resins are injected in pellet or powder form into a high-temperature injection molding machine for melting and then spun into fiber form through injection molding using dies, thus playing important roles in molding various types of plastic.

Materials such as polyethyleneterephthalate (PET), polyethylene (PE), and polypropylene (PP) have been used as these thermoplastic resins. However, with the recent environmental concerns, the use of environmentally friendly and biodegradable materials, such as polylactic acid (PLA), polyglycolic acid (PGA), polylactic-co-glycolic acid (PLGA), polycaprolactone (PCL), polybutylene adipate terephthalate (PBAT), and polyamide (PA), for industrial applications are becoming a big issue.

Biodegradable thermoplastic resins such as PLA mentioned above are significantly rigid and brittle compared to existing petroleum-based plastics, which is problematic and limits the application thereof in various industries. This has led to the use of methods of blending softer and more flexible polymers to change the physical properties of materials or methods of embedding nanocomposites in thermoplastic resins to impart ductility. Although ductility can be greatly improved by methods of mixing polymers with excellent ductility, such as polyethylene glycol (PEG), polyethylene oxide (PEO), and polyurethane (PU), and molding the resulting mixture through injection molding in the former case, polymers that differ in properties are required to be mixed with a chain extender during injection molding. In this case, there are difficulties in the process, which involves consideration of the compatibility between and thermal properties of the polymers. Additionally, the physical properties of the polymers mixed in conjunction may deteriorate the biodegradability and biocompatibility of the original thermoplastic polymers.

In the meantime, the latter case, which involves a method of mixing additives, such as plasticizers, during injection molding to change the ductility and/or physical properties of thermoplastic resins, can cause changes in physical properties using small amounts of additives and is based on thermoplastic resins serving as the target material, which is advantageous. However, there have been the following problems: secondary processes are necessary because most additives are currently unavailable; excessive amounts of additives lead to fiber breakage during high-temperature spinning, resulting in poor spinning processability; and the physical properties of thermoplastic resins deteriorate, resulting in poor post-processability.

Hence, Korean Patent No. 1992492 has disclosed a thermoplastic cellulose derivative composition including a cellulose ester, a plasticizer, and a hydrolysis inhibitor to improve the processability of thermoplastic resins, and Korean Patent No. 1837493 has disclosed an oxidative biodegradable additive composition including a cellulose composition plasticized using a sodium bisulfite plasticizer to provide a thermoplastic cellulose resin with improved mechanical properties.

However, such thermoplastic resins also lack flexibility, making the surface thereof roughen during molding processing, or are easily damaged by external impact, which has been problematic. Even when being mixed with existing degradable plastic raw materials to prepare molded articles, chemical degradation occurs, or aggregates are generated. Additionally, due to being processed to the rigid exterior, there has been a limitation in increasing the mixing ratio.

Therefore, there is a need to develop natural polymer thermoplastic raw materials that have excellent molding processability while significantly improving mechanical properties such as elongation and tensile strength of thermoplastic resins.

### [Document of related art]

### [Patent Document]

(Patent Document 0001) Korean Patent No. 1992492 (Publication date: 2014.06.19.)
(Patent Document 0002) Korean Patent No. 1837493 (Publication date: 2016.07.29.)

### Disclosure

### Technical Problem

The present disclosure, which has been primarily made to solve the abovementioned problems, aims to provide a thermoplastic resin composition that is biodegradable, has excellent molding processability, and has improved mechanical properties such as tensile strength and elongation, and a method of preparing the same.

The present disclosure also aims to provide an environmentally friendly molded article formed from the abovementioned thermoplastic resin composition.

### Technical Solution

To achieve the objectives as described above, one embodiment of the present disclosure provides a thermoplastic resin composition being characterized by including: 65 wt% to 80 wt% of hydroxyethyl cellulose having a viscosity in the range of 4,000 cps to 250,000 cps, the viscosity obtained when measuring an aqueous solution in which 2 wt% of hydroxyethyl cellulose is dissolved in water at a temperature of 20°C using a Brookfield viscometer; and 20 wt% to 35 wt% of glycerin.

In the preferred embodiment of the present disclosure, the thermoplastic resin composition may be characterized by further including one or more additives selected from the group consisting of an antioxidant, a lubricant, a biodegradation accelerator, and a strength reinforcing agent.

In the preferred embodiment of the present disclosure, the lubricant may be characterized by being one or more selected from the group consisting of sorbitol, magnesium stearate, calcium stearate, ethylene glycol, glycerol monostearate, and lecithin.

Another embodiment of the present disclosure provides a method of preparing a thermoplastic resin composition, the method being characterized by including the following steps:
(a) adding 20 wt% to 35 wt% of glycerin to 65 wt% to 80 wt% of hydroxyethyl cellulose having a viscosity in the range of 4,000 cps to 250,000 cps to form a mixture; and (b) kneading the mixture for plasticization.

In the preferred embodiment of the present disclosure, the kneading of Step (b) may be characterized by being performed in the temperature range of 50°C to 90°C at a speed of 300 rpm or higher.

A further embodiment of the present disclosure provides a molded article formed from the thermoplastic resin composition.

In the preferred embodiment of the present disclosure, the molded article may be characterized by having a tensile strength in the range of 4.5 MPa to 6.5 MPa measured according to ASTM D638.

In the preferred embodiment of the present disclosure, the molded article may be characterized by having an elongation in the range of 20 mm to 45 mm measured according to ASTM D638.

### Advantageous Effects

A thermoplastic resin composition, according to the present disclosure, is biodegradable, has excellent molding processability, and has improved mechanical properties, such as tensile strength and elongation, which thus can be applied as an environmentally friendly material in various fields.

### Description of Drawings

FIG. 1 is a photographic image of a molded article prepared in Example 3, the photographic image taken with a digital camera;
FIG. 2 is a photographic image of a molded article prepared in Example 7, the photographic image taken with a digital camera;
FIG. 3 is a photographic image of a molded article prepared in Example 10, the photographic image taken with a digital camera;
FIG. 4 is a photographic image of a molded article prepared in Comparative Example 1, the photographic image taken with a digital camera; and
FIG. 5 is a photographic image of a molded article prepared in Comparative Example 4, the photographic image taken with a digital camera.

### Mode for Invention

Advantages and features of the present disclosure, and methods for achieving those will become clear with reference to the following embodiments described in detail in conjunction with the accompanying drawings. However, the present disclosure is not limited to the embodiments set forth below and will be implemented in many different forms. The following embodiments are provided only to completely disclose the present disclosure and inform those skilled in the art of the scope of the present disclosure. In addition, the present disclosure is defined only by the scope of the appended claims.

In the following description of the present disclosure, when it is determined that the detailed description of the known art related to the present disclosure might obscure the gist of the present disclosure, the detailed description thereof will be omitted.

As mentioned herein, the terms such as "including", "having", and "comprising" used are generally intended to allow other parts to be added unless these terms are used with "only". Any references to singular may include plural unless expressly stated otherwise.

As mentioned herein, "molded article" refers to a material made into a predetermined form, such as an extrudate, an injection molded article, or the like.

Features of various embodiments of the present disclosure may be partially or overall coupled to or combined with each other, and may be variously inter-operated with each other and driven. The embodiments of the present disclosure may be carried out independently from each other or may be carried out together in a co-dependent relationship.

In one aspect, the present disclosure relates to a biodegradable thermoplastic resin composition being characterized by including: 65 wt% to 80 wt% of hydroxyethyl cellulose having a viscosity in the range of 4,000 cps to 250,000 cps; and 20 wt% to 35 wt% of glycerin.

Typically, cellulose derivatives, such as hydroxyethyl cellulose, have a polymeric structure that makes the molding processing thereof into plastic challenging because thermal degradation proceeds at temperatures of the melting point thereof or lower due to being formed of strong hydrogen bonds.

Hence, in the present disclosure, a predetermined amount of glycerin is added to hydroxyethyl cellulose having a predetermined viscosity among cellulose derivatives to weaken the strong hydrogen bonds between hydroxy groups in hydroxyethyl cellulose, the distance between the chains is widened to create an environment prone to micro-Brownian motion so that the glass transition temperature of hydroxyethyl cellulose is reduced, and flexibility is imparted with plasticization, thus providing a natural polymer thermoplastic resin that has excellent molding processability and has significantly improved mechanical properties such as elongation and tensile strength.

Each of the above components will be described in a method of preparing a thermoplastic resin composition, to be described later, to avoid duplication.

In another aspect, the present disclosure relates to a method of preparing a biodegradable thermoplastic resin composition, the method being characterized by including the following steps: (a) mixing 20 wt% to 35 wt% of glycerin in 65 wt% to 80 wt% of hydroxyethyl cellulose having a viscosity in the range of 4,000 cps to 250,000 cps; and (b) kneading the resulting mixture for plasticization.

In the method of preparing the thermoplastic resin composition according to the present disclosure, glycerin is first added to hydroxyethyl cellulose [Step (a)].

This hydroxyethyl cellulose (HEC), a water-soluble polymeric component in white or light yellow-white powder form, has the best salt resistance and pH stability among cellulose derivatives and is recognized as a raw material applicable to various products in all kinds of industries due to having colloidal properties, water retention properties, and temperature resistance.

In the present disclosure, the hydroxyethyl cellulose serving as a base resin may be hydroxyethyl cellulose having a viscosity in the range of 4,000 cps to 250,000 cps. In this case, the viscosity of the hydroxyethyl cellulose is a viscosity obtained when measuring an aqueous solution in which hydroxyethyl cellulose is dissolved in water (hydroxyethyl cellulose: 2 wt%) at a temperature of 20°C using a Brookfield viscometer.

When the viscosity of the hydroxyethyl cellulose is less than 4,000 cps, problems with extrusion failure and browning due to poor kneadability with glycerin may occur, and glycerin may be dissolved after extrusion, causing stickiness. When the abovementioned viscosity exceeds 250,000 cps, the viscosity is excessively high when being kneaded with glycerin, leading to extrusion failure and unstable extrusion operation, and problems with browning due to carbonization may occur.

Additionally, the hydroxyethyl cellulose may be mixed in the amount range of 65 wt% to 80 wt% with respect to the total weight of the composition. When the amount of the hydroxyethyl cellulose is less than 65 wt%, glycerin may be contained in an excessive amount, causing stickiness and making the pelletizing process challenging. Additionally, the resulting mixture may be formed in lump form that is difficult to feed into a device such as an extruder after plasticization. When the abovementioned amount exceeds 80 wt%, plasticization by glycerin may fail to take place sufficiently, resulting in problems in that thermoplastic resins may fail to be prepared.

A currently available product or product prepared may be used as the hydroxyethyl cellulose, and any preparation methods known in the art may be applicable as methods of preparing the hydroxyethyl cellulose without limitation. Preferably, the hydroxyethyl cellulose is prepared by reacting cellulose with an alkalizing agent to obtain alkalized cellulose and then reacting the resulting alkalized cellulose through an etherification reaction.

In the meantime, glycerin is obtainable as a by-product when making soaps or fatty acids from natural resins but has recently been synthesized by treating propylene with chlorine to prepare epichlorohydrin and then hydrolyzing the resulting epichlorohydrin. Glycerin is used in various fields, including rubber, toothpaste, cosmetics, chemicals, paints, cellophane, printing ink, and confectionery.

In the present disclosure, this glycerin, which is mixed in hydroxyethyl cellulose to act to interfere with the strong hydrogen bonding resulting from the hydroxy groups in hydroxyethyl cellulose while widening the distance between the chains of the cellulose polymers to create an environment prone to micro-Brownian motion, may be added in the amount range of 20 wt% to 35 wt% with respect to the total weight of the composition.

When the amount of the glycerin added is less than 20 wt% with respect to the total weight of the composition, the effects of interfering with the strong hydrogen bonding resulting from the hydroxy groups in hydroxyethyl cellulose and widening the distance between the chains of the cellulose polymers to create the environment prone to micro-Brownian motion are insignificant, thus failing to reduce the glass transition temperature and impart the flexibility to the resin. When the abovementioned amount added exceeds 35 wt%, an excessive amount of glycerin may be dissolved, causing stickiness, and problems in that pelletizing is challenging may occur.

Subsequently, the resulting mixture in which glycerin is mixed in hydroxyethyl cellulose may be kneaded to perform plasticization [Step (b)].

The kneading of the resulting mixture may be performed in the temperature range of 50°C to 90°C at a speed of 300 rpm or higher, which preferably is performed in the temperature range of 70°C to 90°C and the speed range of 300 rpm to 600 rpm, to facilitate the plasticization of hydroxyethyl cellulose to take place. Additionally, the kneading time may be suitably adjusted depending on the amount of the resulting mixture or the degree of plasticization but preferably ranges from 30 minutes to 60 minutes.

When the kneading is performed under the conditions described above, the glass transition temperature and the melting point may be reduced so that the micro-Brownian motion of hydroxyethyl cellulose is facilitated, thus improving the plasticization efficiency of hydroxyethyl cellulose even with the use of a small amount of glycerin.

The kneading may be performed by any kneading methods, but may be performed using a kneader alone or in conjunction with extrusion to be described later using an extruder.

In this case, the kneader is not particularly limited. Any kneaders commonly used in the art may be used without limitation, and one example thereof may be a high-speed stirrer, a mixer, a blender, or the like.

In the meantime, the method of preparing the thermoplastic resin composition of the present disclosure may involve further adding an additive, as needed, before and/or after the kneading (plasticization) step for mixing.

Preferably, the additive is one or more selected from the group consisting of an antioxidant, a lubricant, a biodegradation accelerator, and a strength reinforcing agent. The additive is a component commonly used in the art, and the selection of the additive in the present disclosure is not particularly limited.

Specifically, the antioxidant among the additive serves to inhibit thermal degradation during the thermoplasticization and molding of hydroxyethyl cellulose, which may be any antioxidants commonly usable in the art, and examples thereof may include tetrakis(3,5-di-t-butyl-4-hydroxyhydrocinnamate) methane, tris(2,4-di-t-butylphenyl)phosphate, and the like, either alone or in a mixture form.

Additionally, the lubricant serves to improve the lubricating properties of the thermoplastic resin, and any lubricants commonly usable in the art may be used without limitation. In terms of lubricity and miscibility with the thermoplastic resin composition of the present disclosure, the lubricant preferably is one or more selected from the group consisting of sorbitol, magnesium stearate, calcium stearate, ethylene glycol, glycerol monostearate, and lecithin.

Furthermore, any biodegradation accelerators and strength reinforcing agents capable of accelerating the biodegradation of the thermoplastic resin or reinforcing the strength of the resin may be used as the biodegradation accelerator and the strength reinforcing agent, respectively, without limitation. Examples of the biodegradation accelerator may include fatty oils such as soybean oil, castor oil, flaxseed oil, sunflower oil, and coconut oil, fatty acids such as caproic acid, capric acid, lauric acid, oleic acid, olenic acid, and linoleic acid, and fatty acid esters such as ethyl oleate, ethyl linoleate, and isooctylate, either alone or in a mixture form of two or more of the foregoing. Additionally, examples of the strength reinforcing agent may include glass fibers, carbon fibers, and the like.

Such an additive may be selected in any amount commonly used within a range that does not impair the intended physical properties of the thermoplastic resin composition of the present disclosure without limitation. However, with respect to 100 parts by weight of the thermoplastic resin composition of the present disclosure, each additive may be independently added in the amount range of 0.01 to 10 parts by weight, which is preferable.

The method of preparing the thermoplastic resin composition, according to the present disclosure, may further involve extrusion and cutting steps to extrude and cut the kneaded (plasticized) composition, thereby obtaining a productizable form.

The extrusion step may be performed using an extruder, which is not particularly limited, and any extruders commonly used in the art may be used without limitation. For example, a single-screw extruder having a single screw or a multi-screw extruder having a plurality of screws may be used, and a twin-screw extruder having two screws preferably is used in consideration of uniform kneading of materials, ease of processing, and economic feasibility.

In this case, the extrusion may be performed using the extruder in the temperature range of 70°C to 200°C, which preferably is in the range of 130°C to 180°C, so that the thermoplastic resin is efficiently extruded without being degraded. Additionally, the screw speed of the extruder may be in the range of 20 rpm to 300 rpm and preferably is in the range of 20 rpm to 200 rpm. These extrusion conditions enable sufficient extrusion with excellent process efficiency due to the appropriate throughput per unit time and do not cause problems with the thermal degradation of the resin component and the like, which is advantageous.

The resulting extrudate is easily handled using a pelletizer and the like and may be cut into a form that facilitates a molded article to be prepared, preferably in pellet form.

Additionally, the method of preparing the thermoplastic resin composition of the present disclosure may further involve a cooling step through a cooling water bath between the extrusion and cutting steps, which may also be effective. Furthermore, a drying step preferably is performed in the temperature range of 50°C to 80°C for 4 hours to 8 hours after the cutting step.

The thermoplastic resin composition according to the present disclosure, prepared in such a manner, is biodegradable, has excellent elongation or tensile strength, and has excellent molding processability, which can be easily mixed and processed with petroleum-based thermoplastic resins, and thus can be applied as an additive to various thermoplastic resins.

In a further aspect, the present disclosure relates to a molded article formed from the thermoplastic resin composition.

The molded article, according to the present disclosure, is formed from the thermoplastic resin composition described above, which may be prepared into various molded articles (products) through various molding methods such as injection molding, extrusion molding, vacuum molding, casting molding, and the like. Such molding methods are well known to those skilled in the art to which the present disclosure belongs.

The molded article formed by such a molding method may, for example, have a tensile strength in the range of 4.5 MPa to 6.5 MPa and an elongation in the range of 20 mm to 45 mm, measured according to ASTM D638, meaning that the molded article has excellent mechanical properties and molding processability and is biodegradable. Thus, the use thereof may be useful for food, electrical/electronic products, automobile parts, materials for construction use, daily necessities, toys, materials for agricultural use, materials for marine use, and the like.

In describing the thermoplastic resin composition of the present disclosure, the method of preparing the same, and the molded article, other conditions or equipment that are not explicitly described may be appropriately selected without particular limitation within the range commonly practiced in the art.

Hereinafter, the present disclosure will be described in more detail through the following specific examples. The following examples are only to help the understanding of the present disclosure, and the scope of the present disclosure is not limited thereto.

### <Example 1>

To 80 wt% of hydroxyethyl cellulose (Lotte Fine Chemical, HEC B100K) having a viscosity of 100,000 cps serving as a cellulose derivative, 20 wt% of glycerin was added. The resulting mixture was subjected to high-speed mixing at a speed of 300 rpm for 30 minutes for plasticization and then prepared into a strand-form molded article using a twin-screw extruder [the speed of the main motor was set to be in the range of 200 rpm to 250 rpm] having a screw speed of 30 rpm.

### <Examples 2 to 10>

Molded articles were prepared into strand form in the same manner as in Example 1, except for varying the conditions shown in Table 1 below.

### <Comparative Examples 1 to 10>

Molded articles were prepared into strand form in the same manner as in Example 1, except for varying the conditions shown in Table 1 below.

**[Table 1]**

| Classification | Cellulose derivative | | | Plasticizer | |
|---|---|---|---|---|---|
| | Type (Product) | viscosity (cps) | Weight (wt%) | Type | Weight (wt%) |
| Example 1 | HEC (B100K) | 100,000 | 80 | Glycerin | 20 |
| Example 2 | HEC (B100K) | 100,000 | 78 | Glycerin | 22 |
| Example 3 | HEC (B100K) | 100,000 | 74 | Glycerin | 26 |
| Example 4 | HEC (B100K) | 100,000 | 70 | Glycerin | 30 |
| Example 5 | HEC (B100K) | 100,000 | 65 | Glycerin | 35 |
| Example 6 | HEC (B4K) | 4,000 | 74 | Glycerin | 26 |
| Example 7 | HEC (H4K) | 4,000 | 74 | Glycerin | 26 |
| Example 8 | HEC (B30K) | 30,000 | 74 | Glycerin | 26 |
| Example 9 | HEC (H30K) | 30,000 | 74 | Glycerin | 26 |
| Example 10 | HEC (H200K) | 200,000 | 74 | Glycerin | 26 |
| Comparative Example 1 | HEC (H200K) | 100,000 | 86 | Glycerin | 14 |
| Comparative Example 2 | HEC (B100K) | 100,000 | 82 | Glycerin | 18 |
| Comparative Example 3 | HEC (B100K) | 100,000 | 62 | Glycerin | 38 |
| Comparative Example 4 | HEC (H300) | 300 | 74 | Glycerin | 26 |
| Comparative Example 5 | HEC (HM500) | 500 | 74 | Glycerin | 26 |
| Comparative Example 6 | HEC (B100K) | 100,000 | 74 | PEG 400 | 26 |
| Comparative Example 7 | HPMC (PMA15M) | 150 | 74 | Glycerin | 26 |
| Comparative Example 8 | MC (MC40H) | 4,000 | 74 | Glycerin | 26 |
| Comparative Example 9 | HEMC (EMA40H) | 4,000 | 74 | Glycerin | 26 |
| Comparative Example 10 | Corn starch (thermoplastic starch (TPS)) | - | 74 | Glycerin | 26 |
| HEC: Hydroxyethyl cellulose | | | | | |
| HPMC: Hydroxypropyl methylcellulose | | | | | |
| MC: Methyl cellulose | | | | | |
| HEMC: Hydroxyethyl methylcellulose | | | | | |
| PEG 400: Polyethylene glycol 400 | | | | | |

### [Experimental Example]

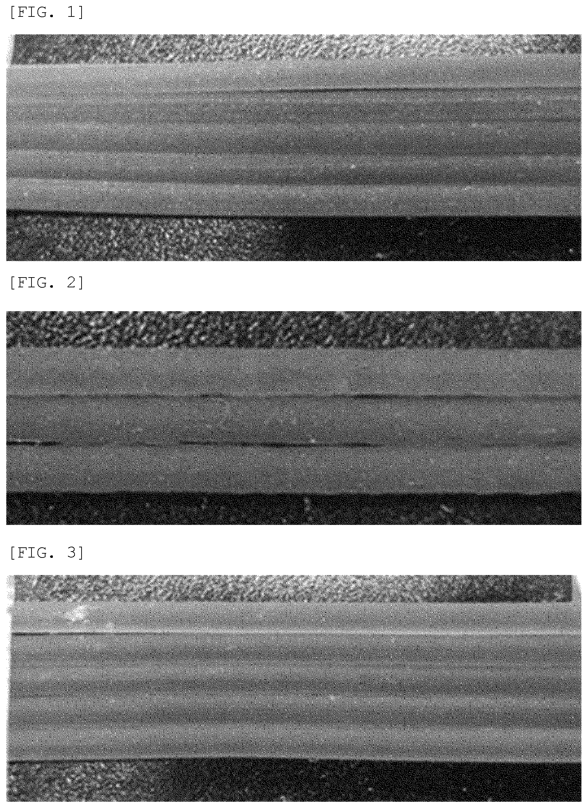

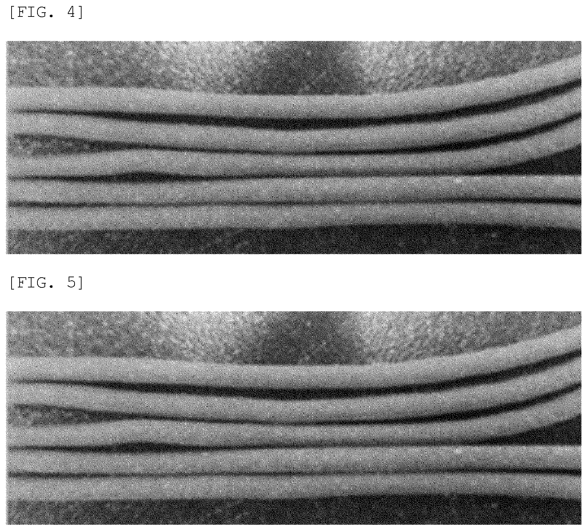

The properties of the specimens prepared in Examples 1 to 10 and Comparative Examples 1 to 10 were measured by the following methods. The results thereof are shown in Table 2 below and FIGS. 1 to 5.

### Measurement methods

(1) Measurement of moldability: The flowability during discharge was visually evaluated immediately after discharging the extrudate. The moldability was evaluated as "good" when the extruded material was in good condition while facilitating the extrusion or was evaluated as "poor" when the extrusion failed. The results thereof are shown in Table 2.
(2) Measurement of extrudate condition: The color, surface roughness, and stickiness of the extrudate immediately after being discharged were measured using an optical microscope (SOMETECH SV-55) at 60x magnification. The results thereof are shown in Table 2 and FIGS. 1 to 5.
(3) Measurement of tensile strength: Each specimen was prepared on the basis of ASTM D638 to measure the tensile strength of thermoplastic resins, and the tensile strength was measured using a universal test machine (UTM, Instron Model 4465). The measurement was performed seven times at a tensile speed of 10 mm/min, and the average of five values, excluding the upper and lower limits, was calculated. The results thereof are shown in Table 2.
(4) Measurement of elongation: Each specimen was prepared on the basis of ASTM D638 to measure the elongation of thermoplastic resins, and the elongation was measured using a universal test machine (UTM, Instron Model 4465). The measurement was performed seven times at a tensile speed of 10 mm/min while setting the grip distance and gauge distance to 40 mm, and the average of five values, excluding the upper and lower limits, was calculated. The results thereof are shown in Table 2.

**[Table 2]**

| Classification | Moldability | Extrudate condition | Tensile strength (MPa) | Elongation |
|---|---|---|---|---|
| Example 1 | Good | Light brown, smooth | 5.23 | 23.12 |
| Example 2 | Good | Light brown, smooth | 5.06 | 24.63 |
| Example 3 | Good | Light brown, smooth | 4.68 | 30.94 |
| Example 4 | Good | Light brown, smooth | 5.98 | 32.58 |
| Example 5 | Good | Light brown, smooth | 5.72 | 33.24 |
| Example 6 | Good | Light brown, smooth | 6.23 | 30.93 |
| Example 7 | Good | Light brown, smooth | 5.25 | 27.69 |
| Example 8 | Good | Light brown, smooth | 5.95 | 42.81 |
| Example 9 | Good | Light brown, smooth | 6.25 | 33.74 |
| Example 10 | Good | Light brown, smooth | 4.92 | 30.94 |
| Comparative Example 1 | Poor | Browning | 4.2 | 13.5 |
| Comparative Example 2 | Poor | Browning | 4.62 | 15.3 |
| Comparative Example 3 | Poor | stickiness | 5.28 | 32.1 |
| Comparative Example 4 | Poor | Browning and rough | 4.35 | 29.67 |
| Comparative Example 5 | Good | Browning | 0.91 | 500 |
| Comparative Example 6 | Good | Browning | 5.97 | 19.53 |
| Comparative Example 7 | Poor | Not measurable | Not measurable | Not measurable |
| Comparative Example 8 | Poor | Not measurable | Not measurable | Not measurable |
| Comparative Example 9 | Poor | Not measurable | Not measurable | Not measurable |
| Comparative Example 10 | Good | Yellow, smooth | 5.2 | 1.5 |

As shown in Table 2 and FIGS. 1 to 5, the molded articles prepared in Examples 1 to 10 had good moldability, while the color and surface condition of the extruded molded articles were excellent, and the tensile strength and elongation were measured to be high. On the other hand, the articles prepared in Comparative Examples 1 to 10 failed to be extruded and thus were not measurable, or even when extruded, the molded articles had rough exteriors, were sticky or browned, and appeared to have low tensile strength and elongation.

In particular, the molded articles extruded in Comparative Examples 1 and 7 to 9 failed to melt and thus were not extruded, and in the case of the molded article extruded in Comparative Example 4, browning occurred seriously, preparing the molded article with a rough surface. Additionally, in the case of the molded article extruded in Comparative Example 5, browning occurred seriously, and the tensile strength appeared to be poor, while the molded article extruded in Comparative Example 10 had good transparency but exhibited poor elongation.

Therefore, it is confirmed that the thermoplastic resin composition, according to the present disclosure, has excellent molding processability and has improved mechanical properties such as tensile strength and elongation. Additionally, the cellulose derivative and glycerin are contained as active ingredients, making the use of the thermoplastic resin composition environmentally friendly and, therefore, useful in various fields.

Although the limited embodiments and drawings of the present disclosure have been disclosed for illustrative purposes, the present disclosure is not limited thereby, and those skilled in the art will appreciate that various alternatives and modifications are possible, without departing from the scope and spirit of the present disclosure as disclosed in the accompanying claims.

## Claims

1. A thermoplastic resin composition comprising:
65 wt% to 80 wt% of hydroxyethyl cellulose having a viscosity in a range of 4,000 cps to 250,000 cps, the viscosity obtained when measuring an aqueous solution in which 2 wt% of hydroxyethyl cellulose is dissolved in water at a temperature of 20°C using a Brookfield viscometer; and
20 wt% to 35 wt% of glycerin.

2. The thermoplastic resin composition of claim 1, further comprising one or more additives selected from the group consisting of an antioxidant, a lubricant, a biodegradation accelerator, and a strength reinforcing agent.

3. The thermoplastic resin composition of claim 2, wherein the lubricant is one or more selected from the group consisting of sorbitol, magnesium stearate, calcium stearate, ethylene glycol, glycerol monostearate, and lecithin.

4. A method of preparing a thermoplastic resin composition, the method comprising:
(a) adding 20 wt% to 35 wt% of glycerin to 65 wt% to 80 wt% of hydroxyethyl cellulose having a viscosity in a range of 4,000 cps to 250,000 cps, the viscosity obtained when measuring an aqueous solution in which 2 wt% of hydroxyethyl cellulose is dissolved in water at a temperature of 20°C using a Brookfield viscometer; and
(b) kneading the resulting mixture for plasticization.

5. The method of claim 4, wherein the (b) kneading is performed in a temperature range of 50°C to 90°C at a speed of 300 rpm or higher.

6. A molded article formed from the thermoplastic resin composition of any one of claims 1 to 3.

7. The molded article of claim 6, wherein the molded article has a tensile strength in a range of 4.5 MPa to 6.5 MPa measured according to ASTM D638.

8. The molded article of claim 6, wherein the molded article has an elongation in a range of 20 mm to 45 mm measured according to ASTM D638.
